Europäisches Patentamt

European Patent Office

Office européen des brevets

(19)

(11) Veröffentlichungsnummer: **0 001 045**
**B1**

(12) **EUROPÄISCHE PATENTSCHRIFT**

(21) Anmeldenummer: **78100576.4**

(22) Anmeldetag: **02.08.78**

(51) Int. Cl.³: **F 16 D 65/54**

(54) Nachstellvorrichtung für eine Teilbelag-Scheibenbremse

(30) Priorität: **13.09.77 DE 2741093**

(43) Veröffentlichungstag der Anmeldung:
**21.03.79 Patentblatt 79/06**

(45) Bekanntmachung des Hinweises auf die Patenterteilung:
**23.07.80 Patentblatt 80/15**

(84) Benannte Vertragsstaaten:
**FR GB NL**

(56) Entgegenhaltungen:
**DE - A - 2 204 354**
**DE - B - 1 237 910**
**US - A - 2 374 117**

(73) Patentinhaber: **Bergische Achsenfabrik Fr. Kotz &
Söhne
Am Ohlerhammer
D - 5276 Wiehl 1 (DE)**

(72) Erfinder: **Brandt, Heinrich
Wülfringhausener Strasse 2
D - 5276 Wiehl (DE)**

(74) Vertreter: **Stenger, Alex, Dipl.-Ing.
Malkastenstrasse 2
D - 4000 Düsseldorf 1 (DE)**

Courier Press, Leamington Spa, England.

Nachstellvorrichtung für eine Teilbelag-Scheibenbremse

Die Erfindung betrifft eine Nachstellvorrichtung für eine Teilbelag-Scheibenbremse für Kraftfahrzeuge oder Anhäger, deren Bremsbacken beiderseits einer Bremsscheibe angeordnet und auf zwei in einem am Achskörper in der Ebene der Bremsscheibe befestigten Träger angeordneten, rohrförmigen Lagerbolzen verschiebbar gelagert sind und mit in den Lagerbolzen angeordneten Zugstangen betätigt werden, die sich mit einem Ende direkt an einer Bremsbacke abstützen und am anderen Ende mit je einem Bremshebel zusammenwirken.

Aus der DE—OS 2 448 787 ist eine Teilbelag-Scheibenbremse der vorstehend beschrieben Gattung bekannt, bei der die Bremshebel mit einem Innengewinde versehen und auf den mit einem Außengewinde versehenen Zugstangen angeordnet sind. Bei dieser bekannten Teilbelag-Scheibenbremse kann jeder Bremshebel mit einer aus einer Schnecke und einem Schnechenrad bestehenden Nachstellvorrichtung ausgestattet sein, die aber den Bremsbelagverschleiß nicht automatisch ausgleicht, sondern von Hand nachgestellt werden muß.

Aus der DE—AS 1 237 910 ist eine Scheibenbremse für Kraftfahrzeuge mit einer drehbaren, an ihrem äußeren Umfang gehaltenen Bremsscheibe bekannt, bei der eine von zwei direkt betätigten Bremsbacken an einem Ende eines Hebels angeordnet ist, an dessen anderem Ende ein Druckzylinder angreift, während die andere direkt betätigte Bremsbacke an einem Ende eines weiteren Hebels angeordnet ist, der mit seinem anderen Ende an einem zwischen den Enden liegenden Punkt des ersten Hebels drehbar angreift. Bei dieser bekannten Scheibenbremse sind zwar die direkt betätigten Bremsbacken an den Enden von Hebeln angeordnet, während die gegenüberliegenden Bremsbacken mittels Zugstangen durch die Reaktionskräfte betätigt werden, aber eine Nachstellvorrichtung für den automatischen Ausgleich des Bremsbelagverschleisses fehlt.

Aus der DE—OS 2 204 354 ist eine Scheibenbremseinrichtung bekannt, bei der zwischen einer Betätigungsvorrichtung und einer direkt betätigten Bremsbacke ein zweiarmiger Hebel angeordnet ist, der an einem Ends mit einem Bewegungseinsteller zum Ausgleich des Bremsbelagverschleisses zusammenwirkt. Der Bewegungseinsteller besitzt eine Ratsche mit einer Verzahnung, die mit einer anderen Verzahnung im Gehäuse zusammenwirkt. Dieser Bewegungseinsteller bewirkt zwar auch schon einen automatischen Ausgleich des Bremsbelagverschleisses, aber eine Anwendung bei der vorliegenden Teilbelag-Scheibenbremse ist wegen der tiefgreifenden konstruktiven Unterschiede nicht möglich.

Schließlich ist aus der US—PS 2 374 117 eine Trommelbremse bekant, bei der zwischen den Enden der Bremsbacken eine hydraulische Spreizvorrichtung angeordnet ist, die eine Vorrichtung zum automatischen Ausgleich des durch den Bremsbelagverschleiß entstehenden Bremsspieles besitzt. Diese bekannte Ausgleichsvorrichtung besteht aus mehreren im Kolben der hydraulischen Spreizvorrichtung in axialer Richtung hintereinander angeordneten, federbelasteten Stiften, die bei größer werdendem Bremsspiel in radialer Richtung nacheinander aus dem Kolben austreten und dessen Einschubtiefe in den Zylinder begrenzen können. Eine Anwendung dieser bekannten, automatischen Ausgleichsvorrichtung auf die vorliegende Teilbelag-Scheibenbremse ist wegen der großen konstruktiven Unterschiede nicht möglich.

Davon ausgehend liegt der Erfindung die Aufgabe zugrunde, die Nachstellvorrichtung für eine Teilbelag-Scheibenbremse der eingangs beschriebenen Gattung so auszubilden, daß ein automatischer Ausgleich des Bremsbelagverschleißes erfolgt.

Zur Lösung dieser Aufgabe wird für eine Teilbelag-Scheibenbremse der eingangs beschriebenen Gattung eine Nachstellvorrichtung vorgeschlagen, bei der jeder Bremshebel an einer an der Zugstange befestigten Zugmutter um eine parallel zur äußeren Bremsbacke verlaufenden Achse verschwenkbar gelagert ist und einen Nocken zum Betätigen der äußeren Bremsbacke besitzt und bei der zwischen dem Nocken und der äußeren Bremsbacke ein gegen eine Druckfeder verschiebbar auf der Zugmutter gelagerter Nachstellring angeordnet ist, der mit radial zustellbaren und in an der inneren Stirnwand des Nachstellringes stufenförmig angeordnete Andrehungen mit Druckfedern einrastbaren Nachstellgliedern zusammenwirkt.

Bei einer raumsparenden Ausführungsform dieser Nachstellvorrichtung können die Zugmutter und der Nachstellring in einer Bohrung der äußeren Bremsbacke versenkt angeordnet sein. Die Nachstellglieder und ihre Druckfedern können dabei in einer diese Bohrung anschneidenden Nut der Bremsbacke unter einem Deckel verdeckt liegen.

Eine erfindungsgemäß ausgebildete Nachstellvorrichtung hat den Vorteil, daß sie eine automatische Nachstellung zum Ausgleich des Bremsbelagverschleißes besitzt.

Eine bevorzugte Ausführungsform einer erfindungsgemäß ausgebildeten Nachstellvorrichtung für eine Teilbelag-Scheibenbremse wird nachfolgend anhand der zugehörigen Zeichnungen beschrieben. In den Zeichnungen zeigen:

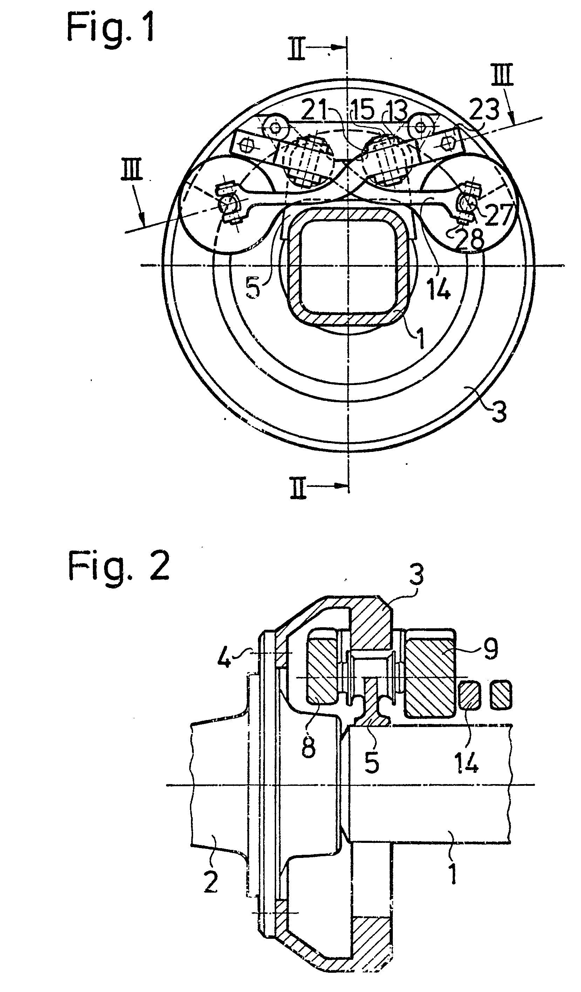

Fig. 1 eine Teilbelag-Scheibenbremse in Ansicht;

Fig. 2 dieselbe Teilbelag-Scheibenbremse entlang der Linie II—II in Figur 1 geschnitten;

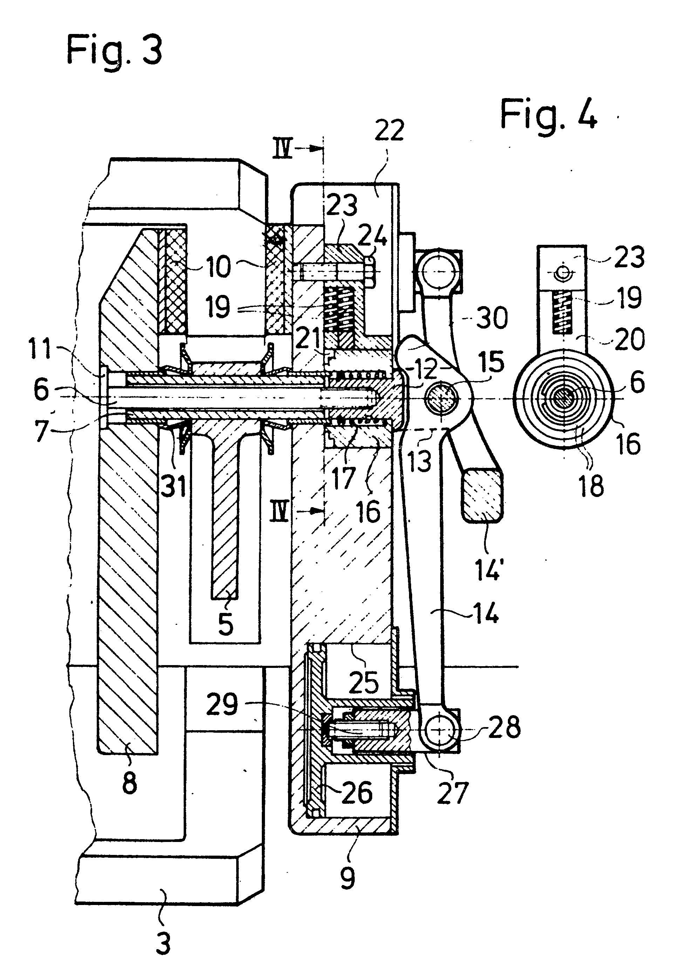

Fig. 3 dieselbe Teilbelag-Scheibenbremse entlang der Linie III—III in Figur 1 geschnitten in vergrößerter Darstellung;

Fig. 4 einen Ausschnitt aus Figur 3 entlang der Linie IV—IV in Figur 3 geschnitten.

An einem Achskörper 1 ist eine Radnabe 2 gelagert, an der eine trommelförmige Bremsscheibe 3 mit Befestigungsschrauben 4 befestigt ist. Die Radnabe 2 ist in bekannter Weise am Achskörper 1 gelargert, so daß auf die Darstellung der Lagerung verzichtet werden kann.

Die Nachstellvorrichtung für die dargestellte Teilbelag-Scheibenbremse besteht aus zwei symmetrischen Anordnungen, welche gemeinsam die Bremswirkung erzeugen, so daß die nachstehende Beschreibung einer Anordnung zum Verständnis der Erfindung ausreicht.

In der Ebene der Bremsscheibe 3 ist am Achskörper 1 ein Träger 5 angeschweißt, in dem zwei Zugstangen 6 in rohrförmigen Lagerbolzen 7 verschiebbar gelagert sind. Die Lagerbolzen 7 sind in den Träger 5 eingepreßt. Auf den Lagerbolzen 7 sind eine innere Bremsbacke 8 und eine äußere Bremsbacke 9 verschiebbar angeordnet, an denen Bremsbeläge 10 belfestigt sind.

Das innere Ende jeder Zugstange 6 ist mit einem Bund 11 versehen, welcher der inneren Bremsbacke 8 außen anliegt. Auf dem äusseren Ende jeder Zugstange 6 ist eine Zugmutter 12 befestigt, deren äußeres Ende als Gabel 13 zur Lagerung eines Bremshebels 14 auf einer Achse 15 ausgebildet ist. Auf der Zugmutter 12 ist ein Nachstellring 16 gegen die Wirkung einer Druckfeder 17 verschiebbar angeordnet. Der Nachstellring 16 besitzt an seinem inneren Ende stufenförmig angeordnete Andrehungen 18, in welche gegen Druckfedern 19 gelagerte Nachstellglieder 20 einrasten können.

Die Zugmutter 12 und der Nachstellring 16 sind in einer Bohrung 21 der äußeren Bremsbacke 9 versenkt angeordnet, die von einer Nut 22 angeschnitten wird, in welcher die Druckfedern 19 mit den Nachstellgliedern 20 unter einem Deckel 23 verdeckt angeordnet sind, der mit einem Bolzen 24 an der Bremsbacke 9 befestigt ist.

Zur Betätigung jedes Bremshebels 14 dient ein in der Bremsbacke 9 angeordneter Zylinder 25 mit einem darin angeordneten Kolben 26, der mittels eines längenveränderlichen Verbindungsbolzens 27 und einer Achse 28 am Bremshebel 14 angelenkt ist. Die Längenveränderung des Verbindungsbolzens 27 erfolgt mit einer Einstellschraube 29.

Die Wirkungsweise der vorstehend beschriebenen Nachstellvorrichtung für eine Teilbelag-Scheibenbremse ist äußerst einfach.

Wird dem Zylinder 25 ein Druckmedium zugeführt, dann verschwenkt der Kolben 26 den zugehörigen Bremshebel 14. Der Bremshebel 14 drückt mit einem an seinem freien vorderen Ende angeformten Nocken 30 über den Nachstellring 16 die äußere Bremsbacke 9 in Richtung auf die Bremsscheibe 3 und zieht gleichzeitig mit einer entsprechenden Reaktionskraft an der Achse 15 über die Zugmutter 12 und die Zugstange 6 die innere Bremsbacke 8 gegen die Bresscheibe 3. Die Bewegungsspalte zwischen den Bremsbacken 8 und 9 und dem Träger 5 sind mit elastischen Dichtringen 31 abgedeckt.

Wenn nach einiger Zeit ein Verschleiß der Bremsbeläge 10 eintritt, vergrößert sich zunächst das Spiel zwischen der Anlagefläche des Nachstellringes 16 und der äußeren Bremsbacke 9.

Wenn das durch den Bremsbelagverschleiß entstandene Spiel eine bestimmte Größe erreicht hat, erfolgt durch die radiale Verschiebeng der Nachstellglieder 20, welche in die Andrehungen 18 einrücken können, eine automatische Nachstellung. Dabei verringert sich das Spiel zwischen der äußeren Bremsbacke 9 und dem Nachstellring 16 um das Überstandsmaß zwischen dem ersten Nachstellglied 20 und der ersten ringförmigen Andrehung 18. Durch die Staffelung der Andrehungen 18 und der Breite der Nachstellglieder 20 kann ein verhältnismäßig großer Nachstellbereich bei vielen kleinen Nachstellungen erreicht werden.

Die Einstellschraube 29 in dem Verbindungsbolzen 27 dient zum Einstellen eines Lüftspieles zwischen dem Nocken 30 des Bremshebels 14 und dem Nachstellring 16. Der Nachstellring 16 wird bei entlüfteter Bremse durch die Druckfeder 17, welche einem Sprengring anliegt, immer in seine Ausgangslage an einem umlaufenden Falz der Zugmutter 12 zurückgeschoben.

Die Nachstellvorrichtung für den zweiten Bremshebel 14' ist ebenso ausgebildet, wie die vorstehend beschriebene Nachstellvorrichtung. Um eine raumsparende und symmetrische Anordnung zu erreichen, sind die beiden Nachstellvorrichtungen zwischen den Zylindern 25 angeordnet, so daß sich die Bremshebel 14 und 14' kreuzen.

*Bezugszeichenliste*

1　Achskörper

2　Radnabe

3　Bremsscheibe

4　Befestigungsschraube

5　Träger

6　Zugstange

| 7 | Lagerbolzen |
|---|---|
| 8 | Bremsbacke (innere) |
| 9 | Bremsbacke (äußere) |
| 10 | Bremsbelag |
| 11 | Bund |
| 12 | Zugmutter |
| 13 | Gabel |
| 14 | Bremshebel |
| 15 | Achse |
| 16 | Nachstellring |
| 17 | Druckfeder |
| 18 | Andrehung |
| 19 | Druckfeder |
| 20 | Nachstellglied |
| 21 | Bohrung |
| 22 | Nut |
| 23 | Deckel |
| 24 | Bolzen |
| 25 | Zylinder |
| 26 | Kolben |
| 27 | Verbindungsbolzen |
| 28 | Achse |
| 29 | Einstellschraube |
| 30 | Nocken |
| 31 | Dichtring |

**Patentansprüche**

1. Nachstellvorrichtung für eine Teilbelag-Scheibenbremse für Kraftfahrzeuge oder Anhäger, deren Bremsbacken beiderseits einer Scheibenbremse angeordnet und auf zwei in einem am Achskörper in der Ebene der Bremsscheibe befestigten Träger angeordneten, rohrförmigen Lagerbolzen verschiebbar gelagert sind und mit in den Lagerbolzen angeordneten Zugstangen betätigt werden, die sich mit einem Ende direkt an einer inneren Bremsbacke abstützen und am anderen Ende mit je einem Bremshebel zusammemwirken, dadurch gekennseichnet, daß jeder Bremshebel (14, 14') an einer an der Zugstange (6) befestigten Zugmutter (12) um eine parallel zur äußeren Bremsbacke (9) verlaufende Achse (15) verschwenkbar gelagert ist und einen Nocken (30) zum Betätigen der äußeren Bremsbacke (9) besitzt und daß zwischen dem Nocken (30) und der äußeren Bremsbacke (9) ein gegen eine Druckfeder (17) verschiebbar auf der Zugmutter (12) gelagerter Nachstellring (16) angeordnet ist, der mit radial zustellbaren und in an der inneren Stirnwand des Nachstellringes (16) stufenförmig angeordnete Andrehungen (18) mit Druckfedern (19) einrastbaren Nachstellgliedern (20) zusammenwirkt.

2. Nachstellvorrichtung nach Anspruch 1, dadurch gekennzeichnet, daß die Zugmutter (12) und der Nachstellring (16) in einer Bohrung (21) der äußeren Bremsbacke (9) versenkt angeordnet ist.

3. Nachstellvorrichtung nach den Ansprüchen 1 und 2, dadurch gekennzeichnet, daß die Nachstellglieder (20) und ihre Druckfedern (19) in einer die Bohrung anschneidenden Nut (22) der äußeren Bremsbacke (9) unter einem Deckel (23) angeordnet sind.

**Claims**

1. An adjustment device for a partially-enclosed disc brake for motor vehicles or trailers, of which the brake pad carriers are arranged on both sides of a brake disc and are displaceably mounted on tubular support pins mounted in a support secured on the axle body in the plane of the brake disc and are actuated by draw rods arranged within the support pins, which are supported directly at one end on an inner brake pad carrier and at the other end cooperate with a respective brake lever, characterised in this that each brake lever (14,14') is pivotally mounted about a shaft (15) extending parallel to the outer brake pad carrier (9) and mounted on a draw nut (12) secured to the draw rod (6) and has a cam (30) for operating the outer brake pad carrier (9) and that between the cam (30) and the outer brake pad carrier (9) an adjustment ring (16) is displaceably arranged, against the action of a compression spring (17) on the draw nut (12), which cooperates with adjustment members (20) which are radially adjustable and engageable with compression springs (19) on steps (18) machined in the end wall of the adjustment ring (16).

2. Adjustment device according to claim 1, characterised in this that the draw nut (12) and the adjustment ring (16) is arranged in a concealed manner in a bore (21) of the outer brake pad carrier (9).

3. Adjustment device according to claims 1 and 2, characterised in this that the adjustment member (20) and its compression springs (19) are arranged in a groove (22) intersecting the bore of the outer brake pad carrier (9).

**Revendications**

1. Dispositif de rattrapage pour frein à disque à garniture partielle, pour véhicules automobiles ou remorques, dont les plateaux de frein sont disposés de part et d'autre d'un disque de frein et sont montés coulissants sur deux tiges d'appui tubulaires disposées dans un support fixé sur le corps d'essieu dans le plan du disque de frein, ces plateaux étant actionnés par des tiges de traction disposées dans les tiges d'appui, ces tiges de traction s'appuyant par une extrémité directement sur un plateau de frein intérieur et coopérant chacune à leur autre extrémité avec un levier de frein, caractérisé en ce que chaque levier de frein (14, 14') est monté basculant autour d'un axe (15) disposé parallèlement au plateau de frein extérieur (9), sur un écrou de traction (12) fixé sur la tige de traction (6), et comporte un talon (30) pour actionner le plateau de frein extérieur (9), une bague de rattrapage (16) montée coulissante sur l'écrou de traction (12) à l'encontre de l'action d'un ressort de compression (17) étant disposée entre le talon (30) et le plateau de frein extérieur (9), cette bague coopérant avec des organes de rattrapage (20) pouvant avancer radialement et pouvant s'enclencher à l'aide de ressorts de compression (19) dans des gorges tournées (18) réalisées en forme de gradins sur la paroi frontale intérieure de la bague de rattrapage (16).

2. Dispositif de rattrapage selon la revendication 1, caractérisé en ce que l'écrou de traction (12) et la bague de rattrapage (16) sont disposés noyés dans un perçage (21) du plateau de frein extérieur (9).

3. Dispositif de rattrapage selon l'une quelconque des revendications 1 et 2, caractérisé en ce que les organes de rattrapage (20) et leurs ressorts de compression (19) sont disposés, sous un couvercle (23), dans une rainure (22) du plateau de frein extérieur (9) recoupant le perçage.

# Fig. 1

# Fig. 2

# Fig. 3

# Fig. 4